# NEUE EUROPÄISCHE PATENTSCHRIFT

(11) **EP 0 761 415 B2**
(45) Veröffentlichungstag und Bekanntmachung des Hinweises auf die Entscheidung über den Einspruch: **19.12.2007**
(45) Hinweis auf die Patenterteilung: 31.10.2001
(21) Anmeldenummer: 96113857.5
(22) Anmeldetag: 29.08.1996
(51) Int. Cl.: B29C 59/14, H05H 1/34

(54) **Verfahren zur Erhöhung der Benetzbarkeit der Oberfläche von Werkstücken**
Method for improving the wettability of the surface of articles
Procédé pour augmenter la mouillabilité de la surface d'objets

(30) Priorität: 01.09.1995 DE 19532412
(43) Veröffentlichungstag der Anmeldung: 12.03.1997
(73) Patentinhaber: PlasmaTreat GmbH, 33803 Steinhagen (DE)
(72) Erfinder: Förnsel, Peter, 32139 Spenge (DE)
(74) Vertreter: Cohausz & Florack

(56) Entgegenhaltungen:
- EP-A- 0 497 996
- DE-A- 3 733 492
- DE-B- 1 075 765
- DE-C- 685 455
- FR-A- 1 181 788
- US-A- 2 892 067
- US-A- 3 515 839
- US-A- 3 579 027
- US-A- 3 803 380
- US-A- 3 849 584
- Journal of adhesion society Japan, vol.6, no.4(1970), S.265-272, Kiyozumi et al, "surface treatment of plastics by Plasmajet"
- L. Dorn und R. Bischoff, Plasma gun - fuer schwer klebbare Kunststoffe", Adhaesion 1989, Heft1/2, Seiten 27-30
- Brockhaus Enzyklopaedie, 17.Auflage, 1972, 14.Band OST-POQ, "Plasma", "Plasmabrenner", "Lichtbogen-Plasmabrenner", "Plasmakanone"
- F. Wendler, "Der Lichtbogen- Plasmabrenner, eine neuartige Hochtemperaturwaermequelle"
- Dfwissen und entdecken, "Chronologie des Stromkrieges"
- Dtv-Lexikon, Band 9, 1967, S. 14-15

## Beschreibung

Die Erfindung betrifft ein Verfahren zur Erhöhung der Benetzbarkeit von Werkstücken mit Flüssigkeiten durch Oberflächen-Vorbehandlung mit den Merkmalen des Oberbegriffs des Anspruches 1.

Wenn Werkstückoberflächen beschichtet, lackiert oder geklebt werden sollen, ist häufig eine Vorbehandlung erforderlich, durch die Verunreinigungen von der Oberfläche entfernt werden und dadurch die - insbesondere bei Werkstücken aus Kunststoff - die Molekülstruktur so verändert wird, daß die Oberfläche mit Flüssigkeiten wie Kleber, Lacken und dergleichen benetzt werden kann.

Der Artikel "Surface Treatment of Plastics by Plasmajet", Kiyozumi, Journal of Adhesion Society of Japan, 1968 offenbart ein Verfahren mit den Merkmalen des Oberbegriffes. des Anspruches 1. Bei diesem Verfahren wird die Bogenentladung mit einer Gleichspannung betrieben.

Ein bekanntes Verfahren zur Vorbehandlung von Kunststoffolien besteht darin, daß man eine Korona-Entladung auf die Folienoberfläche einwirken läßt. Zu diesem Zweck wird die Folie durch einen schmalen Spalt zwischen den Korona-Elektroden hindurchgeführt. Dieses Verfahren ist jedoch nur bei relativ dünnen Folien anwendbar. Außerdem kann es zu einer unerwünschten Vorbehandlung der Rückseite der Folie kommen, beispielsweise wenn sich zwischen der rückseitigen Elektrode und der Folie eine Luftblase befindet, in der eine weitere Entladung stattfindet.

Zum Vorbehandeln der Oberfläche von dickeren Folien oder massiven Werkstücken wird in DE 43 25 939 C1 eine Korona-Düse beschrieben, bei der zwischen den Elektroden ein oszillierend oder umlaufend geführter Luftstrom austritt, so daß man eine flächige Entladungszone erhält, in der die zu behandelnde Oberfläche des Werkstücks mit den Korona-Entladungsbüscheln überstrichen werden kann. Diese Korona-Düse eignet sich jedoch nicht für die Vorhandlung von Werkstücken, die ein verhältnismäßig tiefes Relief aufweisen, da Innenecken, tiefe Nuten und dergleichen mit der flächig ausgedehnten Entladungszone dieser Düse nicht oder nur schwer zu erreichen sind. Außerdem besitzt diese bekannte Korona-Düse eine verhältnismäßig aufwendige und sperrige Konstruktion, da für die Erzeugung des oszillierenden bzw. umlaufenden Luftstroms ein Motorantrieb erforderlich ist.

Aufgabe der Erfindung ist es, ein Verfahren zur Vorhandlung von Werkstückoberflächen mittels elektrischer Entladung anzugeben, das sich auch bei Werkstückoberflächen mit einem relativ komplizierten Relief anwenden läßt.

Diese Aufgabe wird erfindungsgemäß durch die Merkmale des kennzeichnenden Teils des Anspruchs 1 gelöst.

Das Verfahren eignet sich zur Behandlung sowohl von leitenden als auch von nichtleitenden Werkstücken, insbesondere von Werkstücken aus Kunststoff. Weiterhin hat sich gezeigt, daß sich auf die oben beschriebene Weise ein Strahl erzeugen läßt, der einerseits chemisch so aktiv ist, daß eine wirksame Oberflächen-Vorbehandlung erreicht wird, andererseits jedoch eine so niedrige Temperatur besitzen kann, daß auch empfindliche Oberflächen nicht beschädigt werden.

Weitere Vorteile des Verfahrens bestehen darin, daß eine praktisch ozonfreie Vorbehandlung durchgeführt werden kann und sich eine unerwünschte Vorbehandlung der Rückseite zuverlässig ausschließen läßt. Bei nichtleitenden Werkstücken wird auch eine unerwünschte Oberflächenaufladung vermieden.

Verfahren zur Plasmaerzeugung sind als solche in vielfältigen Ausführungsformen bekannt. Beispielsweise beschreibt US-A-3 515 839 einen Plasmabrenner, der zum Schweißen, Plasmaspritzen, Schneiden und dergleichen eingesetzt wird. US-A-3 849 584 beschreibt eine Vorrichtung mit mehreren Plasmabrennern zum Schmelzen von Metallen. DE-C-685 455 beschreibt ein Lichtbogengebläse zur Erzeugung extrem hoher Temperaturen. Bei diesem Gebläse wird das Arbeitsgas drallförmig zugeführt, so daß es den zwischen einer Stiftelektrode und einem Gitter erzeugten Lichtbogen wirbelförmig umströmt. FR-A-1 181 788 beschreibt ein Verfahren zur Lichtbogenerosion, bei dem der von einem Schutzgas umströmte Lichtbogen unmittelbar auf das zu erodierende Metall übertragen wird. US-A-3 579 027 beschreibt ein Zündverfahren für einen Plasmabrenner, bei dem zunächst eine kegelförmige Entladung zwischen der Spitze einer stabförmigen Elektrode und einer diese umgebenden rohrförmigen Elektrode erzeugt wird. US-A-2 892 067 beschreibt einen Hochtemperatur-Plasmabrenner, bei dem der Lichtbogen mit Hilfe des Arbeitsgases aus der Düse des Brenners herausgeblasen wird.

Keine dieser Veröffentlichungen enthält den Vorschlag, ein Plasma mit verhältnismäßig niedriger Temperatur zum Vorbehandeln von Werkstückoberflächen einzusetzen.

Vorteilhafte Weiterbildungen und Ausgestaltungen des erfindungsgemäßen Verfahrens ergeben sich aus den Unteransprüchen.

Das Düsenrohr besteht bevorzugt aus Keramikmaterial und ist am äußeren Umfang mit einem elektrisch leitenden Mantel umgeben, der elektrisch mit der Ringelektrode verbunden oder in einem Stück mit dieser ausgebildet ist und sich am entgegengesetzten Ende bis etwa in Höhe der Spitze der Stiftelektrode erstreckt. In diesem Fall kann bereits mit relativ niedriger Spannung durch das Keramikmaterial hindurch eine Korona-Entladung erzeugt werden, durch die die Bogenentladung gezündet wird. Zum Einschalten des Strahls braucht somit nur die Betriebsspannung hochgeregelt zu werden, und es ist keine wesentlich erhöhte Zündspannung erforderlich.

Das Arbeitsgas - beispielsweise Luft oder Argon - wird vorzugsweise in Höhe der Stiftelektrode so in das Düsenrohr eingeleitet, daß es drallförmig durch das Düsenrohr strömt. In dem Düsenrohr bildet sich dann ein einheitlicher Wirbel, dessen Wirbelkern den Lichtbogen kanalisiert. Selbst bei nicht genau koaxialer Ausrichtung der Stiftelektrode in dem Düsenrohr erhält man so einen sehr stabilen Lichtbogen, der sich in Form eines einzigen scharf begrenzten Astes längs der Achse des Düsenrohres von der Spitze der Stiftelektrode bis etwa zur Mündung des Düsenrohres erstreckt und sich erst dann in mehrere Teiläste auffächert, die radial zur Ringelektrode führen. Der Punkt, an dem sich der Lichtbogen in die Teiläste auffächert, bildet eine nahezu punktförmige Quelle für den reaktiven Strahl. Die "Fokussierung" und Divergenz des Strahls lassen sich in diesem Fall auch durch Variieren des Arbeitsgas-Durchsatzes beeinflussen, ohne daß die geometrische Konfiguration des Generators geändert werden muß.

Wenn ein Arbeitsgas mit geeigneten Zusätzen verwendet wird, läßt sich der Generator auch zum "Plasma-Beschichten" von Oberflächen einsetzen.

An die Elektrode wird bevorzugt eine Hochfrequenz-Wechselspannung in der Größenordnung von 10 bis 30 kV angelegt, der zur Stabilisierung der Entladung eine kleine Gleichspannungskomponente überlagert sein kann. Ein zur Erzeugung dieser Wechselspannung geeigneter, einfach regelbarer HF-Generator wird in DE 42 35 766 C1 beschrieben. Vorzugsweise ist die Ringeleketrode geerdet, so daß Unfälle oder Beschädigungen elektrisch leitender Werkstücke durch unerwünschte Entladungen vermieden werden können.

Durch den gleichfalls geerdeten Mantel wird eine Abschirmung des Entladungsprozesses gegen äußere Störeinflüsse sowie eine hohe elektromagnetische Verträglichkeit (EMV) der Vorrichtung erreicht.

Es ist vorteilhaft, mehrere in einer Reihe oder in mehreren Reihen auf Lücke versetzt angeordnete Strahlgeneratoren in einen gemeinsamen Arbeitskopf zu integrieren, so daß flächig ausgedehnte Werkstücke auf rationelle Weise gleichmäßig vorbehandelt werden können. Die Ringelektroden werden in diesem Fall durch einen sämtlichen Generatoren gemeinsamen elektrisch leitenden Block gebildet, in den die einzelnen Düsenrohre eingebettet sind. Die Anordnung der einzelnen Generatoren kann dabei so kompakt sein, daß die Querschnitte der einzelnen Plasmastrahlen sich in Höhe der zu bearbeitenden Werkstückoberfläche in der Richtung quer zur Relativbewegung von Arbeitskopf und Werkstück überlappen.

Im folgenden werden bevorzugte Ausführungsbeispiele der Erfindung anhand der Zeichnung näher erläutert.

Es zeigen:
- Fig. 1: einen schematischen Längsschnitt durch einen Strahlgenerator; und
- Fig. 2: eine Stirnansicht eines Arbeitskopfes mit mehreren Strahlgeneratoren.

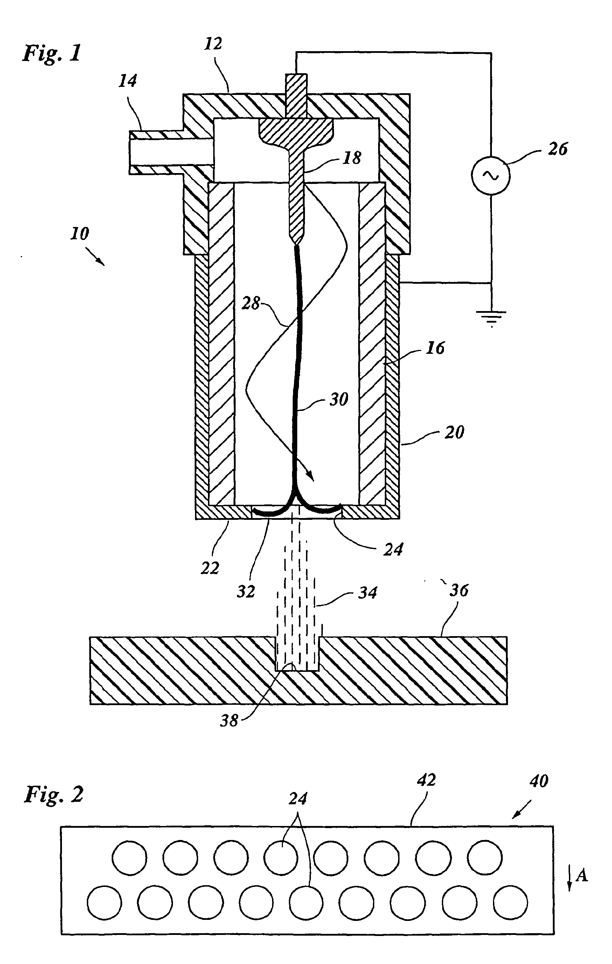

Der in Figur 1 gezeigte Strahlgenerator 10 besitzt ein topfförmiges Gehäuse 12 aus Kunststoff, das seitlich mit einem Anschluß 14 zur Zufuhr eines Arbeitsgases versehen ist. In der Öffnung des Gehäuses 12 ist koaxial ein Düsenrohr 14 aus Keramik gehalten. Im Inneren des Gehäuses 12 ist mittig eine Stiftelektrode 18 aus Kupfer angeordnet, deren Spitze in das Düsenrohr 16 hineinragt. Der äußere Umfang des Düsenrohres ist außerhalb des Gehäuses 12 von einem Mantel 20 aus elektrisch leitendem Material umgeben, der am freien Ende des Düsenrohres 16 eine Ringelektrode 22 bildet. Die Ringelektrode 22 begrenzt eine Düsenöffnung 24, deren Durchmesser etwas kleiner ist als der Innendurchmesser des Düsenrohres 16, so am Auslaß des Düsenrohres eine gewisse Einschnürung erreicht wird.

Der Mantel 20 und damit die Ringelektrode 22 sind geerdet, und zwischen dieser Ringelektrode und der Stiftelektrode 18 wird mit Hilfe eines Hochfrequenzgenerators 26 eine Wechselspannung mit einer Frequenz in der Größenordnung von 20 kHz angelegt, deren Spannung regelbar ist und während des Betriebs des Strahlgenerators etwa in der Größenordnung von 5 bis 30 kV liegt.

Der Anschluß 14 für das Arbeitsgas ist exzentrisch in bezug auf das Gehäuse 12 angeordnet, so daß das zugeführte Arbeitsgas drallförmig durch das Düsenrohr 16 strömt, wie durch den Pfeil 28 in Figur 1 angedeutet wird. Unterstützt durch die Einschnürung am Auslaß des Düsenrohres bildet sich ein stabiler Gaswirbel, dessen Wirbelkem sich längs der Achse des Düsenrohres erstreckt.

Der elektrisch leitende Mantel 20 erstreckt sich am gehäuseseitigen Ende etwa bis in Höhe der Spitze der Stiftelektrode 18. Beim Hochregeln der Spannung kommt es an der Spitze der Stiftelektrode 18 zunächst zu einer Korona-Entladung. Die bläulich leuchtenden Entladungsbüschel erstrecken sich radial auf die Wand des Düsenrohres 16, und der Transport der Ladungsträger zum Mantel 20 erfolgt durch das Keramikmaterial des Düsenrohres 16 hindurch. Diese Korona-Entladung liefert die notwendigen Ionen, durch die bei steigender Spannung eine Bogenentladung von der Stiftelektrode 18 zur Ringelektrode 22 gezündet wird. Bei Verwendung von Luft als Arbeitsgas entsteht ein weiß-blau leuchtender Lichtbogen 30, der sich von der Spitze der Stiftelektrode 18 aus in einen scharf begrenzten dünnen Kanal längs der Achse des Düsenrohres 16 bis etwa in die Mitte der Austrittsöffnung 24 erstreckt. Erst dort teilt sich der Lichtbogen in mehrere Teiläste 32 auf, die radial zur Ringelektrode 22 führen. Der Punkt, an dem sich der axiale Lichtbogen 30 in die einzelnen Teiläste 32 verzweigt, bildet zugleich den Ursprung einer bei Verwendung von Luft als Arbeitsgas schwach goldfarben leuchtenden "Flamme", die vorläufig als Plasmastrahl 34 gedeutet wird.

Dieser Plasmastrahl 34 wird zur Vorbehandlung von Oberflächen genutzt. Im gezeigten Beispiel dient der Plasmastrahl zur Vorbehandlung der Oberfläche eines Werkstücks 36 aus Kunststoff im Bereich einer Nut 38. Man erkannt, daß der Plasmastrahl 34 in die Nut 38 eindringt, so daß auch der ansonsten schwer zugängliche Grund der Nut wirksam vorbehandelt werden kann.

Ob es sich bei der hier als Plasmastrahl 34 bezeichneten "Flamme" tatsächlich um ein Plasma im eigentlichen Sinne, d.h., um ein zumindest teilweise ionisiertes Medium handelt, ist nicht vollständig gesichert. Es wurde versucht, die elektrische Leitfähigkeit dieses Mediums nachzuweisen, indem die Enden zweier Leiter, von denen einer direkt und der andere über eine Glühbirne mit einer Batterie verbunden war, die Flamme gehalten wurden. Die Glühbirne leuchtete jedoch nur dann auf, wenn einer der Äste 32 des Lichtbogens auf die Leiterenden übersprang und diese verband. Die Leitfähigkeit des Plasmastrahls 34 ist somit wesentlich geringer als die des Plasmas innerhalb des Lichtbogens. Möglicherweise handelt es sich bei der "Flamme" nur um ein schwach ionisiertes Plasma oder um ein Medium, das lediglich freie Radikale oder angeregte Atome oder Moleküle enthält. Es konnte jedoch zweifelsfrei nachgewiesen werden, daß der Plasmastrahl 34 die gewünschte vorbehandelnde Wirkung auf die in den Strahl gebrachten Werkstückoberflächen hat. Es wurden verschiedene Kunststoffoberflächen, die normalerweise nicht mit Wasser benetzbar sind, in den Plasmastrahl 34 gebracht und anschließend mit Wasser bestrichen. Die mit dem Plasmastrahl 34 behandelten Oberflächenbereiche konnten danach mit Wasser benetzt werden. Dieser Effekt läßt sich auch bei stark fluorierten Polymeren wie etwa PTFE beobachten. Auch Metalloberflächen konnten mit Hilfe des Plasmastrahls 34 wirksam vorhandelt und beispielsweise von Silikonöl-Rückständen und dergleichen befreit werden. Bei Versuchen mit unedlen Metallen zeigte sich darüber hinaus, daß der Plasmastrahl 34 praktisch keine oxidierende Wirkung hat. Selbst bei der Behandlung von Aluminium kam es nicht zur Bildung einer Oxidschicht.

Die Temperatur des Plasmastrahls 34 ist relativ gering. Ähnlich wie bei einer Kerzenflamme kann man den Finger mit mäßiger Geschwindigkeit durch den Plasmastrahl bewegen, ohne daß es zu Verbrennungen kommt.

Das Düsenrohr 16 hat bei den bisher untersuchten Ausführungsbeispielen einen Innendurchmesser von etwa 8 mm, und der axiale Abstand zwischen der Spitze der Stiftelektrode 18 und der Düsenöffnung 24 beträgt etwa 55 mm. Der Innendurchmesser der Düsenöffnung 24 beträgt etwa 5 mm. Unter diesen Bedingungen erhält man einen Plasmastrahl 34, der eine Länge von etwa 30 mm sowie einen maximalen Durchmesser von etwa 5 mm besitzt. Durch Vergrößern des Abstands zwischen der Stiftelektrode und der Düsenöffnung 24 kann die Bündelung und damit die Reichweite des Plasmastrahls verbessert werden. Auch die Einschnürung an der Düsenöffnung 24 scheint die Bündelung des Plasmastrahls zu begünstigen.

Wenn der Durchsatz des Arbeitsgases durch das Düsenrohr 16 vergrößert wird, verlagert sich der Ursprung des Plasmastrahls weiter nach außen, d.h., in Richtung auf das Werkstück, und die Flamme wird länger und schlanker. Gleichzeitig nimmt die in Figur 1 erkennbare Auswärts-Krümmung der radialen Äste 32 des Lichtbogens zu. Wenn man andererseits die Strömung des Arbeitsgases drosselt oder ganz abschaltet, weitet sich der axiale Lichtbogen 30 auf, bis er schließlich nahezu das gesamte Innere des Düsenrohres ausfüllt. Der Plasmastrahl 34 wird dabei kürzer, und sein Ursprung ist nicht mehr punktförmig, sondern flächig über den Querschnitt der Düsenöffnung 24 verteilt. Bei mäßigem Gasdurchsatz erkennt man, daß der Lichtbogen 30 innerhalb des Düsenrohres der drallförmigen Gasströmung folgt. Bei allmählicher Steigerung des Gasdurchsatzes wird der Lichtbogen 30 in Radialrichtung zunehmend komprimiert und auf der Achse des Düsenrohres fixiert. Der Lichtbogen 30 scheint demnach durch den Kern des Gaswirbels kanalisiert zu werden. Aufgrund dieses Effektes erhält man bei hinreichend hohem Gasdurchsatz einen sehr stabilen Plasmastrahl 34, der von einem punktförmigen Ursprung dicht vor der Mitte der Austrittsöffnung 24 ausgeht. Durch geeignete Wahl der Position des Werkstücks 35 in bezug auf den Strahlgenerator 10 lassen sich so der Ort und die Ausdehnung des behandelten Oberflächenbereiches sowie die Intensität der Plasmabehandlung präzise steuern.

Aufgrund der relativ großen Länge des Plasmastrahls 34 läßt sich der Abstand zwischen dem Werkstück und der Austrittsöffnung 24 des Plasmabrenners so groß wählen, daß eine Schädigung der Oberfläche durch unmittelbare Einwirkung der Äste 32 des Lichtbogens vermieden wird. Ebenso wird bei elektrisch leitenden Werkstücken eine Übertragung des Lichtbogens auf das Werkstück vermieden.

Wie in Figur 1 zu erkennen ist, hat der Strahlgenerator 10 insgesamt relativ kleine radiale Abmessungen, so daß sich mehrere gleichartige Strahlgeneratoren dicht gepackt in einen Arbeitskopf integrieren lassen, der für die Behandlung größerer Werkstückoberflächen geeignet ist. Ein Beispiel eines solchen Arbeitskopfes 40 ist in Figur 2 gezeigt. Anstelle des Mantels 20 in Figur 1 ist hier ein einstückiger Metallblock 42 vorgesehen, in dem die Düsenöffnungen 24 der einzelnen Strahlgeneratoren ausgespart sind und der zugleich die zugehörigen Ringelektroden bildet. Die Düsenrohre 16 gemäß Figur 1 sind - in Figur 2 nicht erkennbar - in den Metallblock 42 eingelassen.

Die Düsenöffnungen 24 sind im gezeigten Beispiel in zwei parallelen Reihen auf Lücke versetzt und einander überlappend angeordnet. Wenn der Arbeitskopf 40 in Richtung des Pfeils A in Figur 2 über die zu behandelnde Oberfläche eines ebenen Werkstücks bewegt wird, kann somit die Werkstückoberfläche mit einem weitgehend gleichmäßigen "Plasmavorhang" vorbehandelt werden, dessen Breite sich durch Zu- oder Abschalten einzelner Strahlgeneratoren nach Bedarf steuern läßt.

## Patentansprüche

1. Verfahren zur Erhöhung der Benetzbarkeit der Oberfläche von Werkstücken mit Flüssigkeiten, durch Oberflächen-Vorbehandlung mittels elektrischer Entladung, bei dem durch eine Plasmaentladung unter Zufuhr eines Arbeitsgases ein gebündelter Strahl eines reaktiven Mediums erzeugt wird, **dadurch gekennzeichnet, dass** die Bogenentladung mit Hilfe einer Hochfrequenz-Wechselspannung betrieben wird und dass das Werkstück mit dem Strahl der reaktiven Medium, dem Übertragung der Bogenentladung überstrichen wird, wobei sich der so erzeugte Lichtbogen von der Spitze einer in einem Düsenrohr angeordneten Stiftelektrode bis zur Mündung des Düsenrohres erstreckt.

2. Verfahren nach Anspruch 1, **dadurch gekennzeichnet, dass** das Arbeitsgas unter Bildung eines Wirbels durch das Düsenrohr (16) strömen gelassen wird und der Lichtbogen (30) im Wirbelkern des Gaswirbels kanalisiert wird.

3. Verfahren nach Anspruch 1 oder 2, **dadurch gekennzeichnet, dass** die Bogenentladung mit Hilfe einer Korona-Entladung gezündet wird.

## Claims

1. Method for increasing the wettability of the surface of workpieces with fluids by surface pre-treatment by means of electrical discharge, a directed stream of a reactive medium being generated by plasma discharge, while a working gas is supplied, the plasma discharge being generated in the form of an arc discharge, and the workpiece surface to be treated being swept with that stream, **characterised in that** the arc discharge is brought about with the aid of a high-frequency alternating voltage and **in that** the workpiece is swept with the stream of reactive medium without transferring the arc discharge.

2. Method according to claim 1, **characterised in that** the working gas is caused to flow through a nozzle tube (16), with the formation of a vortex, and the arc (30) is channelled in the vortex core of the gas vortex.

3. Method according to claim 1 or 2, **characterised in that** the arc discharge is triggered with the aid of a corona discharge.

## Revendications

1. Procédé destiné à augmenter la mouillabilité de la surface de pièces avec des liquides, par un prétraitement de surface au moyen d'une décharge électrique, dans lequel l'on produit, par décharge de plasma sous apport d'un gaz de travail, un jet en faisceau d'un fluide réactif, la décharge de plasma étant produite en tant que décharge d'arc, et on fait passer ce jet sur la surface à traiter de la pièce, **caractérisé en ce que** la décharge d'arc est actionnée à l'aide d'une tension alternative haute fréquence et que l'on fait passer le jet du fluide réactif sur la pièce sans transfert de la décharge d'arc.

2. Procédé selon la revendication 1, **caractérisé en ce que** l'on fait, amène le gaz de travail à s'écouler, en formant un tourbillon, à travers une lance (16) et on canalise l'arc électrique (30) dans le coeur du tourbillon de gaz.

3. Procédé selon la revendication 1 ou 2, **caractérisé en ce qu'**on amorce la décharge d'arc à l'aide d'une décharge corona.
